# EUROPÄISCHE PATENTSCHRIFT

(11) **EP 1 556 246 B1**
(45) Veröffentlichungstag und Bekanntmachung des Hinweises auf die Patenterteilung: **15.08.2007**
(21) Anmeldenummer: 03772267.5
(22) Anmeldetag: 28.10.2003
(51) Int. Cl.: B60N 3/10

(54) **GETRÄNKEHALTER**
DRINKS HOLDER
PORTE-BOISSONS

(30) Priorität: 29.10.2002 DE 20216675 U
(43) Veröffentlichungstag der Anmeldung: 27.07.2005
(73) Patentinhaber: TRW Automotive Electronics & Components GmbH & Co. KG, 67677 Enkenbach/Alsenborn (DE)
(72) Erfinder: WAGNER, Jörg, 67661 Kaiserslautern (DE); WEBER, Andreas, 66497 Contwig (DE)
(74) Vertreter: Sties, Jochen
(86) Internationale Anmeldenummer: PCT/EP2003/011942
(87) Internationale Veröffentlichungsnummer: WO 2004/039627

(56) Entgegenhaltungen:
- EP-A- 0 748 717
- DE-A- 10 029 485
- DE-A- 10 101 642
- DE-A- 10 117 202
- DE-A- 19 630 528
- US-A- 5 018 633
- US-A- 5 102 085
- US-A- 5 634 621
- US-B1- 6 361 008

## Beschreibung

Die Erfindung betrifft einen Getränkehalter, wie er insbesondere in Kraftfahrzeugen verwendet wird.

Ein solcher Getränkehalter muß eine Vielzahl von Anforderungen erfüllen. Zum einen soll er eine Vielzahl von unterschiedlichen Behältnissen zuverlässig aufnehmen und festhalten können. Zum anderen soll er aus einer Betriebsstellung, in der er die Behältnisse aufnehmen kann, in eine möglichst platzsparende Bereitschaftsstellung überführt werden können, und umgekehrt. In der Bereitschaftsstellung soll der Getränkehalter vorzugsweise nicht sichtbar sein, beispielsweise hinter einer Abdeckung versteckt, oder in anderer Weise so in eine ihn umgebende Verkleidung integriert, daß ein harmonischer optischer Gesamteindruck entsteht.

Die bisher bekannten Getränkehalter haben diese Anforderungen nicht immer überzeugend erfüllt.

Verschiedene Arten von Getränkehaltern sind außerdem aus der DE-A-100 29 485, der US-A-5,634,621, der US-A-5,018,633 und der US-A-5,102,085 bekannt.

Die Aufgabe der Erfindung besteht darin, einen Getränkehalter zu schaffen, der die oben genannten Anforderungen erfüllt.

Zu diesem Zweck ist erfindungsgemäß ein Getränkehalter vorgesehen, insbesondere für ein Kraftfahrzeug, mit einem kastenartigen Sockel, der auf seiner Oberseite eine Aufstandsfläche aufweist, mit einem kastenartigen Deckel, der über den Sockel gestülpt ist, so daß die Seitenflächen des Sockels als Führung für den Deckel dienen, wobei der Deckel eine Aussparung aufweist, die konzentrisch mit der Aufstandsfläche ist. Dieser Getränkehalter zeichnet sich durch einen kompakten Aufbau aus, wobei die sichtbar in der Mitte angeordnete Aufstandsfläche zur Aufbewahrung von beispielsweise Münzen oder anderen Kleinteilen dienen kann, wenn der Getränkehalter nicht benutzt wird.

Vorteilhafte Ausgestaltungen der Erfindung ergeben sich aus den Unteransprüchen.

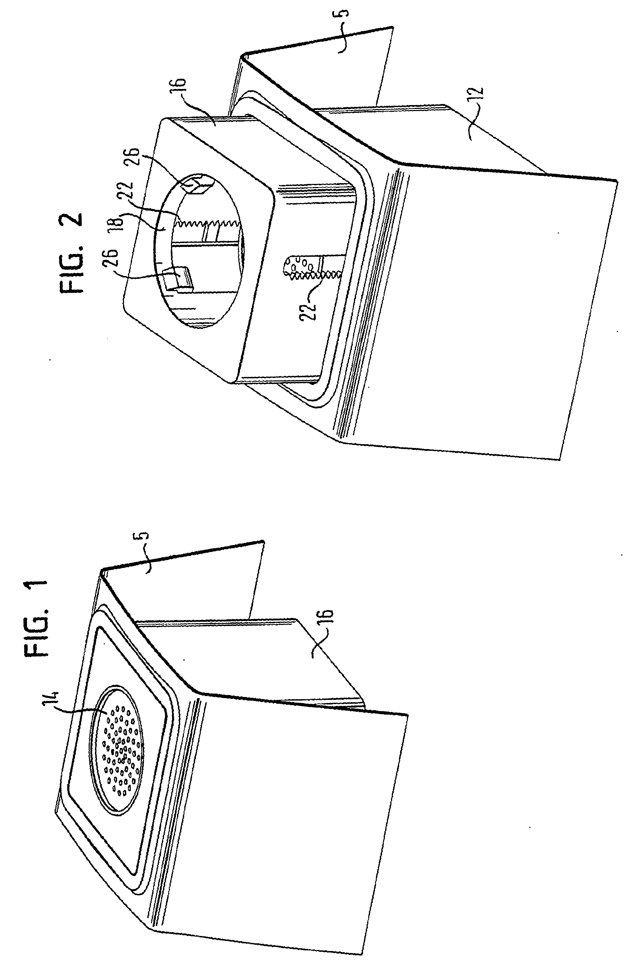

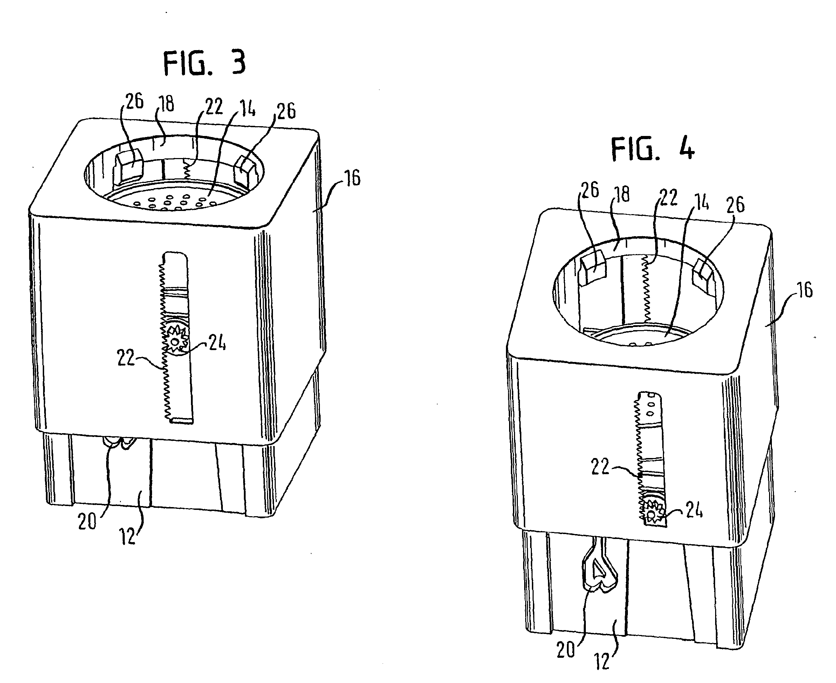

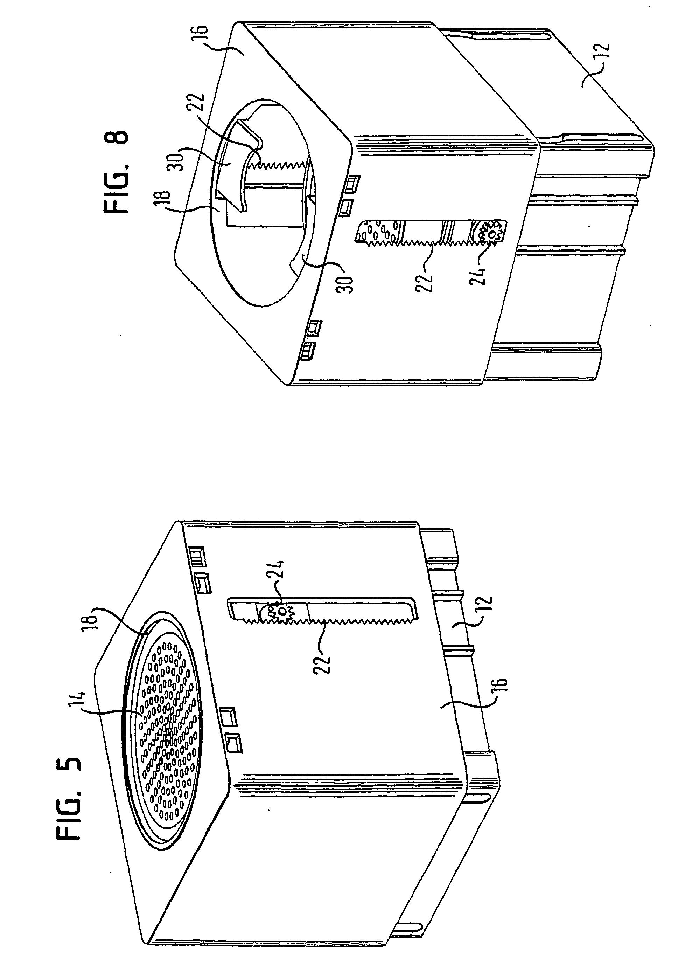

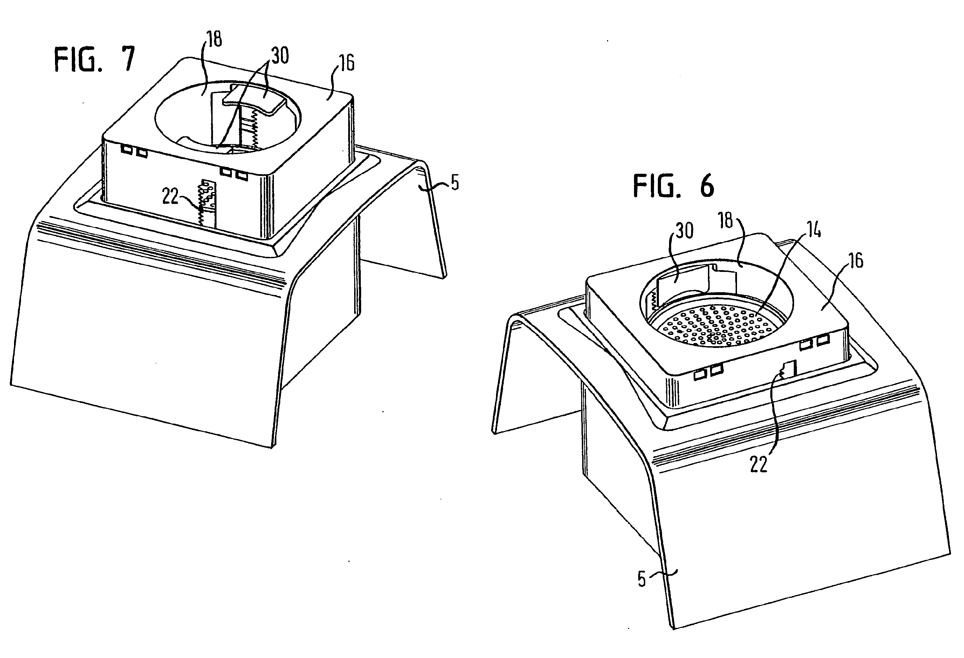

Die Erfindung wird nachfolgend anhand zweier Ausführungsformen beschrieben, die in den beigefügten Zeichnungen dargestellt sind. In diesen zeigen:
1. einen Getränkehalter gemäß einer ersten Ausführungsform der Erfindung im eingefahrenen Zustand;
2. den Getränkehalter von Figur 1 im ausgefahrenen Zustand;
3. den Getränkehalter in einem Zwischenzustand ohne Verkleidungsteil;
4. den Getränkehalter von Figur 3 im ausgefahrenen Zustand;
5. einen Getränkehalter gemäß einer zweiten Ausführungsform der Erfindung im eingefahrenen Zustand;
6. den Getränkehalter von Figur 5 in einem teilweise ausgefahrenen Zsutand;
7. den Getränkehalter von Figur 6 im vollständig ausgefahrenen Zustand; und
8. den Getränkehalter von Figur 5 im vollständig ausgefahrenen Zustand.

In den Figuren 1 bis 4 ist ein Getränkehalter gemäß einer ersten Ausführungsform der Erfindung dargestellt. Er kann in einem Verkleidungsteil 5 eines Kraftfahrzeugs angebracht werden, beispielsweise der Verkleidung der Mittelkonsole, und besteht aus einem kastenartigen Sockelteil 12, das auf seiner Oberseite eine Aufstandsfläche 14 aufweist. Diese ist mit einem rutschfesten Gummibelag versehen.

Über den Sockel 12 ist ein kastenartiger Deckel 16 gestülpt, so daß die Seitenwände des Deckels 16 auf den Seitenflächen des Sockels 12 geführt sind. Zur Verbesserung der Führung haben der Sockel 12 und der Deckel 16 einen aneinander angepaßten, vorzugsweise quadratischen Querschnitt. Der Deckel 16 weist eine Aussparung 18 auf, die konzentrisch zur Aufstandsfläche 14 ist.

Der Deckel 16 kann relativ zum Sockel 12 zwischen einer eingefahrenen Stellung (siehe Figur 1) und einer ausgefahrenen Stellung (siehe Figur 4) verstellt werden. Es ist eine (nicht dargestellte) Feder vorgesehen, die den Deckel 16 in die ausgefahrene Stellung beaufschlagt. In der eingefahrenen Stellung ist die Aufstandsfläche 14 etwa bündig mit der Oberseite des Deckels 16 und innerhalb der Aussparung 18 angeordnet. Die Aufstandsfläche 14 kann dann als Ablagefläche für Kleinteile wie Münzen, etc. verwendet werden.

In der eingefahrenen Stellung wird der Deckel 16 von einem Druck-Druck-Verriegelungsmechanismus gehalten, von dem in den Figuren 3 und 4 eine Kurvenbahn 20 zu sehen ist. Ein solcher Verriegelungsmechanismus ist allgemein bekannt, so daß hier nicht weiter auf ihn eingegangen werden muß. Durch einen Druck auf den Deckel 16 wird der Verriegelungsmechanismus freigegeben, so daß der Deckel 16 in die ausgefahrene Stellung (siehe Figur 4) verstellt wird. Damit dies nicht schlagartig erfolgt, sind im Deckel 16 eine Zahnstange 22 und im Sockel ein Zahnrad 24 angeordnet, das in die Zahnstange 22 eingreift, und zwar auf zwei einander gegenüberliegenden Seiten, damit eine symmetrische Krafteinleitung gewährleistet ist. Die beiden Zahnräder 24 sind mit einer Dämpfungseinrichtung gekoppelt. Diese kann einen Silikon-Dämpfer enthalten.

Am Rand der Aussparung 18 sind mehrere elastische Haltenasen 26 vorgesehen, deren zur Auflagefläche 14 gewandte Stirnseite abgeschrägt ist, so daß diese automatisch nach außen wegklappen, wenn der Deckel 16 in die eingefahrene Stellung überführt wird und die Haltenasen auf die Aufstandsfläche auflaufen.

In den Figuren 5 bis 8 ist ein Getränkehalter gemäß einer zweiten Ausführungsform gezeigt. Der Unterschied zur ersten Ausführungsform besteht darin, daß anstelle der Haltenasen 26 zwei einander gegenüberliegende Haltelaschen 30 vorgesehen sind. Diese sind zwischen einer eingeklappten Stellung (siehe Figur 6) und einer ausgeklappten Stellung (siehe die Figuren 7 und 8) verstellbar, wobei sie von einer Feder elastisch in die ausgeklappte Stellung beaufschlagt werden. Die Haltelaschen 30 dienen in gleicher Weise wie die Haltenasen 26 dazu, ein in den Getränkehalter eingesetztes Behältnis zu halten und zu stabilisieren.

Es ist ein (nicht dargestellter) Gestängemechanismus vorgesehen, mittels dem die Haltelaschen 30 aus der ausgeklappten Stellung in die eingeklappte Stellung überführt werden, sobald der Deckel 16 in die eingefahrene Stellung überführt wird. Anstelle des Gestängemechanismus kann auch ein Kurvenscheibenmechanismus verwendet werden, der aus einer Kurvenbahn und einem an diesem anliegenden Tastelement besteht.

## Patentansprüche

1. Getränkehalter, insbesondere für ein Kraftfahrzeug, mit einem kastenartigen Sockel (12), der auf seiner Oberseite eine Aufstandsfläche (14) aufweist, und einem kastenartigen Deckel (16), über den Sockel (12) gestülpt **dadurch gekennzeichnet, dass** der Deckel (16) ist, so daß die Seitenflächen des Sockels als Führung für den Deckel (16) dienen, wobei der Deckel eine Aussparung (18) aufweist, die konzentrisch mit der Aufstandsfläche (14) ist.

2. Getränkehalter nach Anspruch 1, **dadurch gekennzeichnet, daß** der Sockel (12) und der Deckel (16) einen rechteckigen Querschnitt haben.

3. Getränkehalter nach einem der vorhergehenden Ansprüche, **dadurch gekennzeichnet, daß** in einer der Seitenwände des Deckels (16) eine Zahnstange (22) angeordnet ist, in die ein Zahnrad (24) eingreift, das im Sockel (12) gelagert ist und mit einer Dämpfungsvorrichtung zusammenwirkt.

4. Getränkehalter nach einem der vorhergehenden Ansprüche, **dadurch gekennzeichnet, daß** eine Feder vorgesehen ist, die den Deckel in eine ausgefahrene Stellung beaufschlagt.

5. Getränkehalter nach einem der vorhergehenden Ansprüche, **dadurch gekennzeichnet, daß** ein Druck-Druck-Verriegelungsmechanismus (20) vorgesehen ist, mittels dem der Deckel (16) in einer eingefahrenen Stellung gehalten werden kann.

6. Getränkehalter nach einem der vorhergehenden Ansprüche, **dadurch gekennzeichnet, daß** am Deckel (16) mehrere elastische Haltenasen (26) vorgesehen sind.

7. Getränkehalter nach einem der vorhergehenden Ansprüche, **dadurch gekennzeichnet, daß** am Deckel mehrere Haltelaschen (30) vorgesehen sind, die zwischen einer ausgeklappten und einer eingeklappten Stellung verstellbar sind und von einer Feder in die ausgeklappte Stellung beaufschlagt werden.

8. Getränkehalter nach Anspruch 7, **dadurch gekennzeichnet, daß** ein Gestängemechanismus vorgesehen ist, mittels dem die Haltelaschen (30) eingeklappt werden können, wenn der Deckel in die eingefahrene Stellung gebracht wird.

9. Getränkehalter nach Anspruch 7, **dadurch gekennzeichnet daß** ein Kurvenscheibenmechanismus vorgesehen ist, mittels dem die Haltelaschen (30) eingeklappt werden können, wenn der Deckel in die eingefahrene Stellung gebracht wird.

## Claims

1. A cup holder, especially for a motor vehicle, comprising a box-like pedestal (12) which has a placement surface (14) on its top, and a box-like cover (16), **characterized in that** the cover (16) is placed over the pedestal (12), so that the side surfaces of the pedestal serve as a guide for the cover (16), the cover having a recess (18) which is concentric with the placement surface (14).

2. The cup holder according to claim 1, **characterized in that** the pedestal (12) and the cover (16) have a rectangular cross-section.

3. The cup holder according to either of the preceding claims, **characterized in that** disposed in one of the side walls of the cover (16) is a toothed rack (22) into which a toothed wheel (24) engages that is supported in the pedestal (12) and cooperates with a damping means.

4. The cup holder according to any of the preceding claims, **characterized in that** a spring is provided that urges the cover into an extended position.

5. The cup holder according to any of the preceding claims, **characterized in that** a click-click locking mechanism (20) is provided by means of which the cover (16) can be held in a retracted position.

6. The cup holder according to any of the preceding claims, **characterized in that** a plurality of elastic holding noses (26) is provided on the cover (16).

7. The cup holder according to any of the preceding claims, **characterized in that** provided on the cover is a plurality of holding tabs (30) that can be adjusted between a folded-out position and a folded-in position and are urged into the folded-out position by a spring.

8. The cup holder according to claim 7, **characterized in that** a rod mechanism is provided by means of which the holding tabs (30) can be folded in when the cover is moved into the retracted position.

9. The cup holder according to claim 7, **characterized in that** a cam mechanism is provided by means of which the holding tabs (30) can be folded in when the cover is moved into the retracted position.

## Revendications

1. Porte-boissons, en particulier pour un véhicule automobile, comportant un socle (12) en forme de caisson qui présente une face portante (14) sur sa face supérieure, et comportant un couvercle (16) en forme de caisson, **caractérisé en ce que** le couvercle (16) est emboîté sur le socle (12) de telle sorte que les faces latérales du socle servent de guidage pour le couvercle (16), le couvercle présentant un évidement (18) qui est concentrique à la face portante (14).

2. Porte-boissons selon la revendication 1, **caractérisé en ce que** le socle (12) et le couvercle (16) ont une section transversale rectangulaire.

3. Porte-boissons selon l'une des revendications précédentes, **caractérisé en ce qu'**une crémaillère (22) dans laquelle s'engage une roue dentée (24) montée dans le socle (12) et coopérant avec un dispositif d'amortissement est agencée dans l'une des parois latérales du couvercle (16).

4. Porte-boissons selon l'une des revendications précédentes, **caractérisé en ce qu'**il est prévu un ressort qui sollicite le couvercle dans une position avancée.

5. Porte-boissons selon l'une des revendications précédentes, **caractérisé en ce qu'**il est prévu un mécanisme de verrouillage (20) du type pousser-pousser au moyen duquel le couvercle (16) peut être maintenu dans une position rétractée.

6. Porte-boissons selon l'une des revendications précédentes, **caractérisé en ce que** plusieurs ergots de retenue élastiques (26) sont prévus sur le couvercle (16).

7. Porte-boissons selon l'une des revendications précédentes, **caractérisé en ce qu'**il est prévu sur le couvercle plusieurs languettes de retenue (30) qui peuvent être déplacées entre une position sortie et une position rentrée et qui sont sollicitées dans la position sortie par un ressort.

8. Porte-boissons selon la revendication 7, **caractérisé en ce qu'**il est prévu un mécanisme à tringles au moyen duquel les languettes de retenues (30) peuvent être rentrées lorsque le couvercle est amené dans la position rétractée.

9. Porte-boissons selon la revendication 7, **caractérisé en ce qu'**il est prévu un mécanisme à came au moyen duquel les languettes de retenue (30) peuvent être rentrées lorsque le couvercle est amené dans la position rétractée.
